# EUROPÄISCHE PATENTSCHRIFT

(11) **EP 0 858 857 B1**
(45) Veröffentlichungstag und Bekanntmachung des Hinweises auf die Patenterteilung: **07.06.2000**
(21) Anmeldenummer: 98101420.2
(22) Anmeldetag: 28.01.1998
(51) Int. Cl.: B23K 26/02, B23K 26/08

(54) **Verfahren und Vorrichtung zum Laserschweissen**
Method and device for laser welding
Procédé et dispositif de soudage laser

(30) Priorität: 12.02.1997 DE 19705278
(43) Veröffentlichungstag der Anmeldung: 19.08.1998
(73) Patentinhaber: DaimlerChrysler AG, 70567 Stuttgart (DE)
(72) Erfinder: Bachhofer, Andreas, 70597 Stuttgart (DE); Rief, Alfons, Dr., 72135 Dettenhausen (DE)

(56) Entgegenhaltungen:
- EP-A- 0 200 098
- EP-A- 0 622 150

## Beschreibung

Die Erfindung betrifft ein Verfahren und eine Vorrichtung zum Laserschweißen nach der im Oberbegriff des Verfahrensanspruchs 1 näher definierten Art.

Aus der DE 36 30 889 A1 ist ein Verfahren sowie eine Vorrichtung zum Längsnahtschweißen von Behälterrümpfen mittels Laserstrahl bekannt. Gemäß dem dort beschriebenen Verfahren werden die Blechkanten des zu verschweißenden Werkstücks in eine solche Position zueinander gebracht, daß sie einen spitzen Winkel bilden. In die durch diesen spitzen Winkel gebildete Öffnung wird dann zur Herstellung einer Schweißnaht ein Laserstrahl gerichtet. Die Vorrichtung weist dabei unter anderem mehrere Druckrollen zur Fixierung bzw. zur Ermöglichung des Vorschubes des Bleches auf.

Nachteilig bei diesem Verfahren ist jedoch, daß damit nur eine bezüglich ihrer Position an den zu verschweißenden Blechen sehr ungenaue Schweißnaht herstellbar ist. Es kann dabei sogar vorkommen, daß die Schweißnaht in einem ihrer Teilbereiche eines der Bleche überhaupt nicht berührt.

Die DE 39 02 292 A1 beschreibt ein Verfahren zum zusätzlichen Verschweißen des Verbindungsbereiches von durch Falzen mit einem Behälterrumpf verbundenen Dekkeln mittels eines Laserstrahles sowie eine Anordnung zur Durchführung eines solchen Verfahrens.

Auch bei diesem Verfahren und der damit verbundenen Vorrichtung ist die ungenügende Positioniergenauigkeit der durch den Laserstrahl hergestellten Schweißnaht nachteilig.

Bei den bekannten Laserschweißverfahren sind zur Verbesserung der Positionierung der Schweißnaht Nahtverfolgungs- oder Suchsysteme bekannt, die jedoch sehr aufwendig sind und somit die Schweißvorrichtungen entsprechend verteuern.

Aus dem allgemeinen Stand der Technik ist zum Verschweißen von Kraftstofftanks das zu den Widerstandsschweißverfahren gehörende Rollennahtschweißen bekannt.

Kraftstofftanks wurden bisher meist aus Stahl gefertigt, aufgrund der allgemeinen Tendenz innerhalb des Automobilbaus in Richtung der Leichtbauweise werden sie jedoch in jüngster Zeit vermehrt aus Aluminium hergestellt. Da das Rollennahtschweißen bei Aluminium aufgrund der höheren Wärmeleitfähigkeit und des geringeren Schmelzpunktes von Aluminium jedoch sehr problematisch ist und in einem erhöhten Energiebedarf sowie erheblich reduzierter Schweißvorschubgeschwindigkeit resultiert, versucht man, auch in diesem Bereich mit dem Laserschweißen zu arbeiten.

Es ist daher Aufgabe der Erfindung, ein Verfahren und eine Vorrichtung zum Laserschweißen zu schaffen, durch welche der Schweißvorgang ganz allgemein verbessert wird und mit dem eine Erhöhung der Schweißvorschubgeschwindigkeit erreicht werden kann. Weiterhin soll dadurch eine möglichst exakte Positionierung der Schweißnaht im Bezug zu den zu verschweißenden Blechen erreicht werden.

Erfindungsgemäß wird diese Aufgabe durch die im Verfahrensanspruch 1 und im Vorrichtungsanspruch 2 genannten Merkmale gelöst.

Durch die Auseinanderspreizung der Blechkanten während des Schweißvorganges wird eine Geometrie derart geschaffen, daß der Laserstrahl zu jedem Zeitpunkt des Schweißvorganges auf eine im Voraus exakt bekannte Position gerichtet werden kann. Dadurch entsteht eine keilförmige Schweißnaht, die zu jedem Zeitpunkt genau definiert ist.

Gegenüber anderen Schweißverfahren, wie z.B. dem bekannten Rollennahtschweißverfahren, kann vorteilhafterweise eine wesentlich höhere Schweißvorschubgeschwindigkeit erzielt werden, wobei die Ausschußrate durch die Reduzierung von Prozeßfehlern jedoch minimal ist.

Darüber hinaus kann durch das erfindungsgemäße Verfahren die Flanschbreite reduziert werden, was zum Teil zu erheblicher Materialeinsparung führt.

EP-A-200098 offenbart ein Verfahren gemäß dem Oberbegriff des Anspruchs 1 sowie eine Vorrichtung zum Laserschweißen zweier sich zu einer Flanschnaht überlappender Bleche, welche eine Preßeinrichtung umfaßt, die senkrecht zu der Ebene der Flanschnaht angeordnete Anpreßglieder aufweist.

Weitere vorteilhafte Ausgestaltungsmöglichkeiten der Erfindung ergeben sich aus den Unteransprüchen und den nachfolgend anhand der Zeichnung prinzipmäßig beschriebenen Ausführungsbeispielen.

Es zeigt:
- Fig. 1: ein Verfahren zum Verschweißen zweier Bleche durch einen Laserstrahl mit Hilfe einer erfindungsgemäßen Vorrichtung in einer ersten Ausführungsform;
- Fig. 2: einen Schnitt nach der Linie II-II aus Fig. 1; und
- Fig. 3: ein Verfahren zum Verschweißen zweier Bleche durch einen Laserstrahl mit Hilfe einer erfindungsgemäßen Vorrichtung in einer zweiten Ausführungsform.

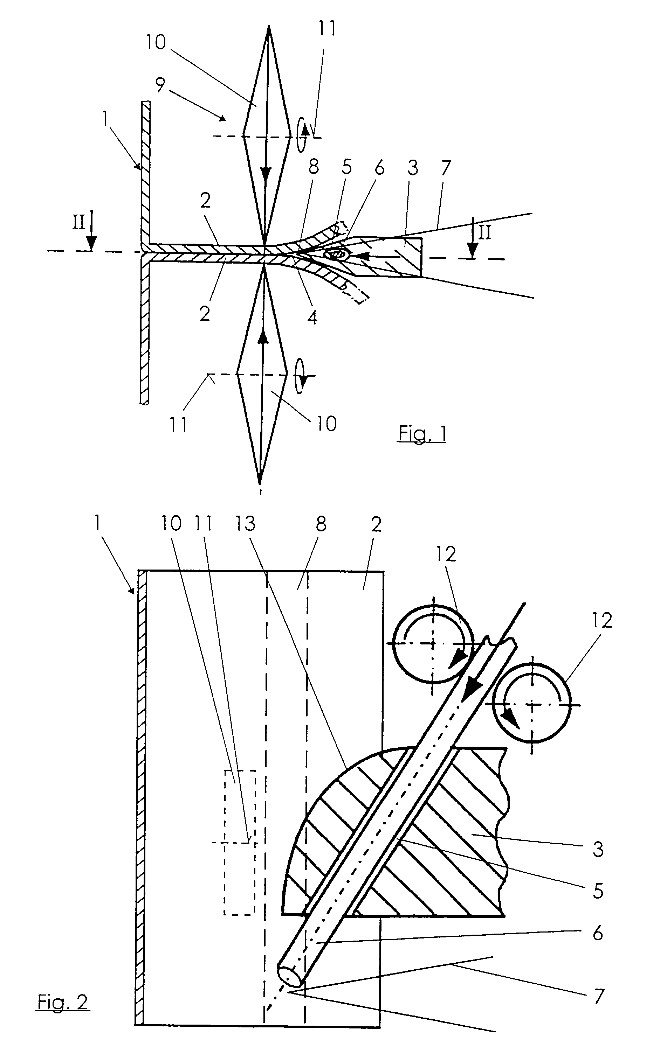

Gemäß Fig. 1 ist ausschnittsweise ein Werkstück 1, z.B. ein Behälter (Kraftstofftank) dargestellt, welches in diesem Fall durch zwei entsprechend geformte und sich überlappende Bleche 2 zu einem Behälter gebildet wird. Die Bleche 2 können aus gleichen oder unterschiedlichen metallischen Werkstoffen bestehen, mit oder ohne Beschichtung ausgebildet sein und die gleichen oder unterschiedliche Materialstärken aufweisen. Die Bleche 2, deren Dicke meist zwischen 0,5 mm und 3 mm liegt, werden an ihren Enden durch ein keilförmiges Spreizglied 3 auseinandergespreizt und nach außen umgebördelt. Dadurch entsteht ein für das Schweißen benötigter Spalt 4 zwischen den Blechen 2.

Das Spreizglied 3 weist eine schräge Bohrung 5 auf, welche zur Durchführung eines Schweißdrahtes 6 vorgesehen ist. Dies ermöglicht eine schleppende Zuführung des Schweißdrahtes 6 durch das Spreizglied 3, wobei der Zuführwinkel in einem Bereich zwischen 5° und 45° liegen kann. Auch eine stechende Zuführung von Schweißdraht 6 durch das Spreizglied 3 ist selbstverständlich möglich. Dabei liegt die Zuführrate von Schweißdraht 6 üblicherweise zwischen 0 und 10 mm³/mm.

Durch einen in den Grund des Spaltes 4 gerichteten Laserstrahl 7 wird durch Aufschmelzen des Schweißdrahtes 6 eine keilförmige Flanschnaht 8 in an sich bekannter Weise erzeugt.

Gleichzeitig spreizt das Spreizglied 3 mit der Schweißvorschubgeschwindigkeit, mit der das Werkstück 1 am Spreizglied 3 und dem Laserstrahl 7 vorbeigeführt wird, prozeßsimultan direkt vor dem Laserstrahl 7 kontinuierlich die Bleche 2 auf. Somit wird eine genaue Position für das Auftreffen des Laserstrahls 7 in dem Spalt 4 zwischen den Blechen 2 festgelegt. Dadurch spielt auch der Längenunterschied zwischen den Enden der Bleche 2 bzw. andere prozeßbedingte Toleranzen, wie z.B. Faltenbildung, Flanschbreitenschwankungen, Aufdickungen oder Rückfedern der Bleche 2 keine Rolle mehr, da durch das Umbördeln eine exakte Geometrie an der Stelle der Flanschnaht 8 erzeugt wird.

Senkrecht zur Spreizrichtung ist eine Preßeinrichtung 9 angeordnet, welche zwei Druckrollen 10 als Anpreßglieder aufweist, durch welche die Bleche 2 kontinuierlich zusammengepreßt werden. Die Druckrollen 10, deren Drehachsen 11 parallel zur Ebene der Flanschnaht 8 liegen, können das Werkstück 1 mit Schweißvorschubgeschwindigkeit an dem Laserstrahl 7 und an dem Spreizglied 3 vorbeibewegen. Dadurch kann der Vorschub für das Werkstück 1 übernommen werden.

Statt einem Vorschub des Werkstückes 1 kann selbstverständlich im Rahmen der Erfindung auch der Laserstrahl 7 zusammen mit dem Spreizglied 3 mit Schweißvorschubgeschwindigkeit an dem in diesem Fall stationären Werkstück 1 entlangbewegt werden. Auch eine kombinierte Bewegung ist möglich.

Fig. 2 zeigt zusätzlich zu Fig. 1, wie durch zwei Rollen 12 der Vorschub des Schweißdrahtes 6 durch die Bohrung 5 in dem Spreizglied 3 erreicht wird. Dabei ist auch eine an dem Spreizglied 3 angeordnete Abrundung 13 dargestellt, die das Aufbiegen der Bleche 2 erleichtert.

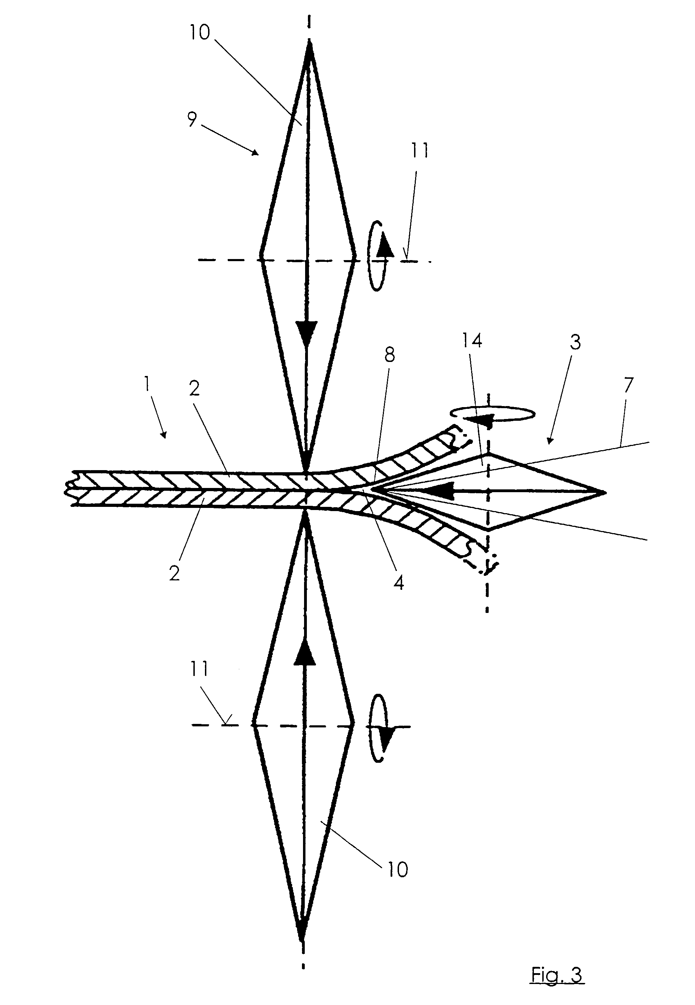

Fig. 3 zeigt eine zweite Ausführungsform des Spreizgliedes 3. Das Spreizglied 3 weist dabei eine mit Schweißvorschubgeschwindigkeit mitlaufende Spreizrolle 14 auf. Durch die um ihre eigene Achse rotierende Spreizrolle 14 werden in gleicher Weise wie oben beschrieben, jedoch mit geringerem Kraftaufwand und geringeren Reibungskräften, die Bleche 2 auseinandergespreizt und umgebördelt.

Ein weiterer Unterschied ist, daß die Spreizrolle 14 keine Bohrung 5 zur Durchführung des Schweißdrahtes 6 aufweist.

Die Spreizrolle 14 kommt dann zur Anwendung, wenn kein zusätzlicher Schweißdraht 6 notwendig ist, sondern wenn durch Aufschmelzen des Werkstoffes das Werkstück 1 geschweißt werden kann.

Das Spreizglied 3, dessen Keilwinkel in diesem Anwendungsfall zwischen 15° und 80° liegt, kann quer zur Schweißrichtung ausgelenkt werden, wodurch die beiden Bleche 2 unterschiedlich stark umgebördelt werden.

Durch das oben beschriebene Verfahren und die zugehörige Vorrichtung ergibt sich eine durch den Laserstrahl 7 erzeugte Flanschnaht 8, deren Lage sehr viel besser als durch bisher bekannte Schweißverfahren beherrscht werden kann. Weiterhin kann dadurch auf teure Nahtverfolgungs- oder Suchsysteme verzichtet werden.

## Patentansprüche

1. Verfahren zum Laserschweißen zweier sich zu einer Flanschnaht überlappender Bleche (2), die im Bereich der Flanschnaht zusammengepreßt werden, wobei die Bleche (2) und der Laserstrahl (7) während des Schweißvorganges relativ zueinander bewegt und die Schweißung durch einen in der Ebene der Flanschnaht liegenden Laserstrahl (7) bewirkt wird,
**dadurch gekennzeichnet**, daß
die Bleche (2) an einer dem Laserstrahl (7) in Schweißrichtung vorausliegenden Position prozeßsimultan auseinandergespreizt werden, und daß der Laserstrahl (7) in den Bereich des Spaltgrundes der auseinandergespreizten Bleche (2) eingestrahlt wird.

2. Vorrichtung zur Durchführung des Verfahrens nach Anspruch 1, wobei
zum Auseinanderspreizen der Bleche (2) ein keilförmiges Spreizglied (3) in Schweißvorschubrichtung vor dem Laserstrahl (7) angeordnet ist, und wobei zwischen dem zu schweißenden Werkstück (1) und den auseinandergespreizten Blechen (2) eine Preßeinrichtung (9) mit senkrecht zu der Ebene der Flanschnaht (8) angeordneten Anpreßgliedern (10) angeordnet ist.

3. Vorrichtung nach Anspruch 2,
**dadurch gekennzeichnet**, daß das keilförmige Spreizglied (3) auf der in Schweißvorschubrichtung gelegenen Seite mit einer Abrundung (13) versehen ist.

4. Vorrichtung nach Anspruch 2 oder 3,
**dadurch gekennzeichnet**, daß das keilförmige Spreizglied (3) mit einer zur Schweißstelle gerichteten Bohrung (5) versehen ist, in der ein Schweißdraht (6) geführt ist.

5. Vorrichtung nach Anspruch 2,
**dadurch gekennzeichnet**, daß das Spreizglied (3) eine wenigstens annähernd mit der Schweißvorschubgeschwindigkeit mitlaufende Spreizrolle (14) aufweist.

6. Vorrichtung nach einem der Ansprüche 2 bis 5,
**dadurch gekennzeichnet**, daß die Preßeinrichtung (9) mit Schweißvorschubgeschwindigkeit mitlaufende Druckrollen (10) aufweist, deren Drehachsen (11) parallel zur Ebene der Flanschnaht (8) liegen.

## Claims

1. Process for laser welding two metal sheets (2), which overlap each other at a flange join, and which are pressed together in the area of the flange-join, whereby the metal sheets (2) and the laser-jet (7) move relative to each other during the welding process, and the welding is effected through a laser-jet (7) lying in the plane of the flange-join,
characterized in that the metal sheets (2) are forced apart at the point of welding, in accordance with the direction of welding, in front of the laser jet (7), and that the laser-jet (7) is radiated into the area of the base of the gap in the metal sheets (2) which are spread apart.

2. Device for carrying out the process in accordance with claim 1, whereby, a wedge shaped spreading member (3), for spreading the metal sheets (2) apart, is disposed in front of the laser-jet (7), in the direction of the forward movement of welding, and whereby a pressure device (9), with pressure members (10) which are vertically aligned in relation to the plane of the flange-join (8), is disposed between the workpiece (1) to be welded and the metal sheets (2) which are spread apart.

3. Device in accordance with claim 2,
characterized in that the wedge-shaped spreading member (3) is provided, on the side facing the forward movement of the welding, with a rounding-off (13).

4. Device in accordance with claims 2 or 3,
characterized in that the wedge-shaped spreading member (3) is provided with a boring (5), aligned towards the point of welding, in which the welding rod (6) is directed.

5. Device in accordance with claim 2,
characterized in that the spreading member (3) has a spreading roller (14), which runs approximately in accordance with the speed of forward movement of the weld.

6. Device in accordance with any one of claims 2 to 5,
characterized in that the pressure-device (9) has pressure rollers (10) which run at the speed of the movement of the point of welding, the said rollers (10) having axes of rotation (11) which run parallel to the plane of the flange-join (8).

## Revendications

1. Procédé de soudage par laser de deux tôles (2) qui se recouvrent en établissant un joint de rebords et sont pressées ensemble dans la zone de ce joint, les tôles (2) et le rayon laser (7) étant déplacés l'un par rapport à l'autre pendant l'opération de soudage et le soudage étant produit par un rayon laser (7) situé dans le plan du joint de rebords,
caractérisé en ce que les tôles (2) sont mutuellement écartées, simultanément avec le processus, à un endroit situé à l'avant du rayon laser (7) dans la direction de soudage, et que le rayon laser (7) est envoyé dans la zone du fond de la fente formée entre les tôles (2) écartées l'une de l'autre.

2. Dispositif pour la mise en oeuvre du procédé selon la revendication 1, dans lequel, pour l'écartement des tôles (2), un organe d'écartement (3) en forme de coin est placé devant le rayon laser (7) dans la direction d'avance de soudage, et dans lequel un dispositif de pressage (9), comportant des organes de pression (10) disposés perpendiculairement au plan du joint de rebords (8), est agencé entre la pièce (1) à souder et les tôles (2) mutuellement écartées.

3. Dispositif selon la revendication 2, caractérisé en ce que l'organe d'écartement (3) en forme de coin est pourvu d'un arrondi (13) sur le côté situé dans la direction d'avance de soudage.

4. Dispositif selon la revendication 2 ou 3, caractérisé en ce que l'organe d'écartement (3) en forme de coin est pourvu d'un perçage (5) dirigé vers le point de soudage et dans lequel est guidé un fil de matériau d'apport (6).

5. Dispositif selon la revendication 2, caractérisé en ce que l'organe d'écartement (3) comprend un galet d'écartement (14) qui accompagne le mouvement au moins approximativement à la vitesse d'avance de soudage.

6. Dispositif selon une des revendications 2 à 5, caractérisé en ce que le dispositif de pressage (9) présente des galets presseurs (10) qui accompagnent le mouvement à la vitesse d'avance de soudage et dont les axes de rotation (11) sont parallèles au plan du joint de rebords (8).
